# EUROPEAN PATENT SPECIFICATION

(11) **EP 3 717 727 B1**
(45) Date of publication and mention of the grant of the patent: **16.04.2025**
(21) Application number: 18883873.4
(22) Date of filing: 29.11.2018
(51) Int. Cl.: E06B 9/42, E06B 9/50, E06B 9/78

(54) **ROLLER SHADE ASSEMBLY**
ROLLBLENDENVORRICHTUNG
ENSEMBLE STORE À ROULEAU

(30) Priority: 29.11.2017 US 201762592038 P; 15.02.2018 US 201862630871 P
(43) Date of publication of application: 07.10.2020
(60) Divisional application: 23210112.1
(73) Proprietor: Smart Shade Innovations Inc., Chatham, Ontario N7M 5W7 (CA)
(72) Inventor: MEYERINK, Larry, Dresden, Ontario N0P 1M0 (CA); BATTE, Anthony, Glencoe, Ontario N0L 1M0 (CA); GRUBB, Dean, Appin, Ontario N0L 1A0 (CA); MEYERINK, Alex, Chatham, Ontario N7M 0R1 (CA)
(74) Representative: Bridle Intellectual Property
(86) International application number: PCT/CA2018/000232
(87) International publication number: WO 2019/104414

(56) References cited:
- WO-A1-2008/023857
- CN-A- 105 019 800
- DE-U1- 202013 100 680
- US-A- 5 016 701
- US-A1- 2011 168 339
- US-A1- 2014 238 624
- US-A1- 2014 238 624
- US-B1- 8 672 115
- US-B2- 7 617 858
- US-B2- 7 806 160
- US-B2- 9 334 687

## Description

### Field of the Invention

The present invention relates to window coverings, in particular, to a roller shade assembly.

### Background

Roller shades are typically operated by chain drive assemblies or other similar mechanisms, that are attached to one end of the roller tube of the roller shade. These components require space between the end of the roller tube and the adjacent side of the window opening. Roller shades are often used for room darkening or privacy control, including in so called "blackout" applications, where it is desirable to block substantially all of the light entering a room through a window. In these applications, it is important for the roller shade fabric to cover as much of the window opening as possible. Accordingly, there is a need to minimize the space required for the mechanical components of the roller shade between the fabric of the roller shade and the sides of the window opening.

Another common problem with roller shades is the "telescoping" of the fabric on the roller tube. The term "telescoping" refers to the improper winding of the fabric on the roller tube that occurs because of a misalignment of the fabric on the roller, causing each successive layer of fabric to become offset to one side relative to the layer below. "Telescoping" can cause damage to the fabric and interfere with the operation of the roller shade.

Unwanted gaps between the fabric of the roller shade and the window opening may also occur at the bottom of the window opening, due to an angled window sill or improperly cut fabric on the roller shade. These gaps also reduce the effectiveness of the roller shade in blocking light from the window. Accordingly, there is a need to minimize or eliminate gaps at the bottom of the window opening.
US 2022/168339 Al discloses a roller shade assembly for stiff shade materials. DE 20 2013 100680 U1 discloses a roller blind with side guides. WO 2008/023857 Al is directed to blinds for adjusting illumination made of thick material. US 7 617 858 B2 discloses a skew adjustment device for coverings for architectural openings. US 2014/0238624 A1 discloses a window blind.

### Summary of the Invention

The invention provides the roller shade assembly of claim 1.

In an embodiment, the frame has a first end cap at the first end, a second end cap at the second end, and a cover extending between the first and second end caps. The cover has a top and at least one side and the drive assembly is attached to one side of the cover.

In another embodiment, a fabric retaining assembly is mounted to the frame between the first and second end so as to rest on the roller and has a press bar attached thereto extending parallel to the roller along substantially the entire length of the roller.

A sheet material is rolled on the roller with a fixed end attached to the roller and a free end having a weight attached thereto. According to another embodiment, a bottom bar extends along the free end of the sheet material and has a channel extending the length of the bottom bar with an upper end and the weight is loosely retained within the channel. The channel is sized to permit the weight to move within the channel and the upper end of the channel is sized to prevent the weight from exiting the channel.

In another embodiment, the weight is a clip having two opposing sections that are shaped complementary to one another so as to lock together to form a grip portion that grips the free end of the sheet material and retains it within the grip portion of the weight.

### Brief Description of the Drawings

In order that the invention may be more clearly understood, embodiments thereof will now be described in detail by way of example, with reference to the accompanying drawings, in which:
Figure 1 is an exploded view of a roller shade assembly, according to the present invention.
Figure 2 is an exploded detail view, showing the first and second gears and drive assembly at one end of the roller shade assembly.
Figure 3 is a perspective detail view of the elements of the roller shade assembly, shown in Figure 2.
Figure 4 is a perspective detail view of the roller and the first and second gears of the roller shade assembly.
Figure 5 is a side sectional view of the roller shade assembly.
Figure 6A is an exploded view of the bottom bar of the roller shade assembly.
Figure 6B is an exploded view of another embodiment of the bottom bar of the roller shade assembly.
Figure 7A is a side sectional view of the bottom bar, shown in Figure 6A.
Figure 7B is a side sectional view of the bottom bar, shown in Figure 6B.
Figure 8 is a side view of another embodiment of the bottom bar of the roller shade assembly.
Figure 9 is a perspective detail view of another embodiment of the elements of the roller shade assembly, shown in Figures 3.
Figure 10 is an exploded detail view of the drive assembly, shown in Figure 9.
Figure 11 is a side sectional view of a clip of the roller shade assembly, shown partially wrapped in fabric.
Figures 12A-K are side sectional view of various embodiments of the clip of the roller shade assembly.

### Description of the Invention

The roller shade assembly, according to the present invention, minimizes the unwanted gaps of uncovered area of the window opening. The mechanical components of the roller shade assembly are arranged so as to minimize the number of components located between the end of the roller and the window opening, thereby reducing the amount of space required between the end of the roller and the window opening. This permits the roller to be sized more closely to the width of the window opening, thereby minimizing unwanted gaps along the sides of the window opening.

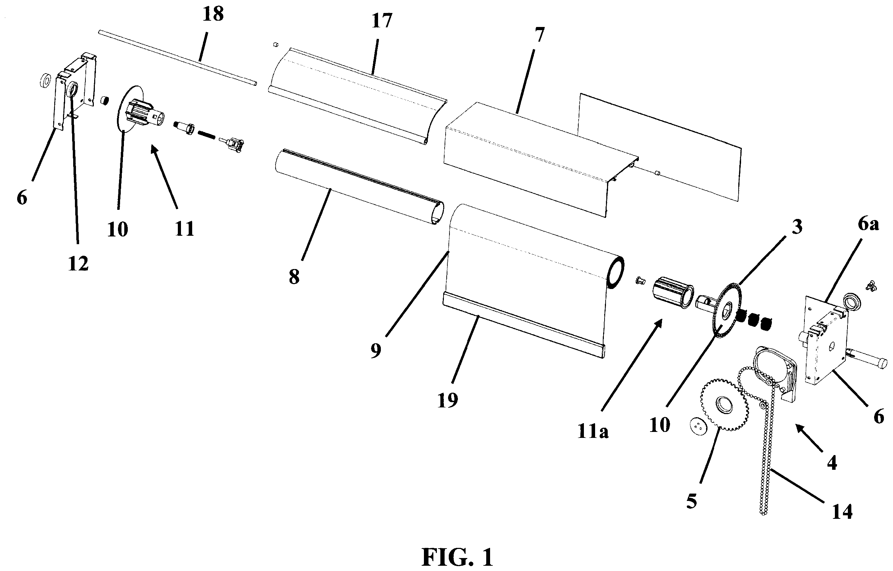

As shown in Figure 1, the roller shade assembly has a frame **1,** a roller **2** having a first gear **3,** and a drive assembly **4** having a second gear **5** that is operatively engaged with the first gear **3.** The frame **1** is attached within the window opening to both opposing sides of the window opening at or adjacent the top of the window opening to permit the roller shade assembly to selectively cover substantially the entire window opening. The frame **1** has two end caps **6,** which are attached to the opposing sides of the window opening, and a cover **7** extending between the end caps **6.** The cover **7** is preferably an L-shaped cover that extends across the top and rear of the roller shade assembly, but may also be a U-shaped cover that also extends across the front of the roller shade assembly.

The roller 2 is a roller tube 8 with a length of sheet material, or fabric 9, rolled thereon. The roller 2 is rotatably mounted to the frame 1 and has opposing ends and a rotational axis, about which the roller 2 rotates to wind and unwind the fabric 9 on the roller tube 8. At each end of the roller tube 8 is a fabric retaining flange, or collar 10, which extends radially outwardly from the roller 2 to retain the fabric 9 in alignment on the roller tube 8. The collars 10 act as guides for the fabric 9 and assist in reducing or preventing "telescoping" of the fabric 9 on the roller tube 8 as the fabric 9 is repeatedly wound and unwound on the roller 2. The collars 10 are disc-shaped flanges that are preferably formed integrally with the end plugs 11 inserted into each end of the roller tube 8. The end plugs 11 at each end of the roller 2 are mounted to the inside of the end caps 6 by way of bearings 12, to permit free rotation of the roller 2 relative to the frame 1. Alternatively, one or both end plugs 11 may have a recess formed therein that fits onto a pin extending inwardly from the adjacent end cap 6, to permit the roller 2 to rotate about the pin.

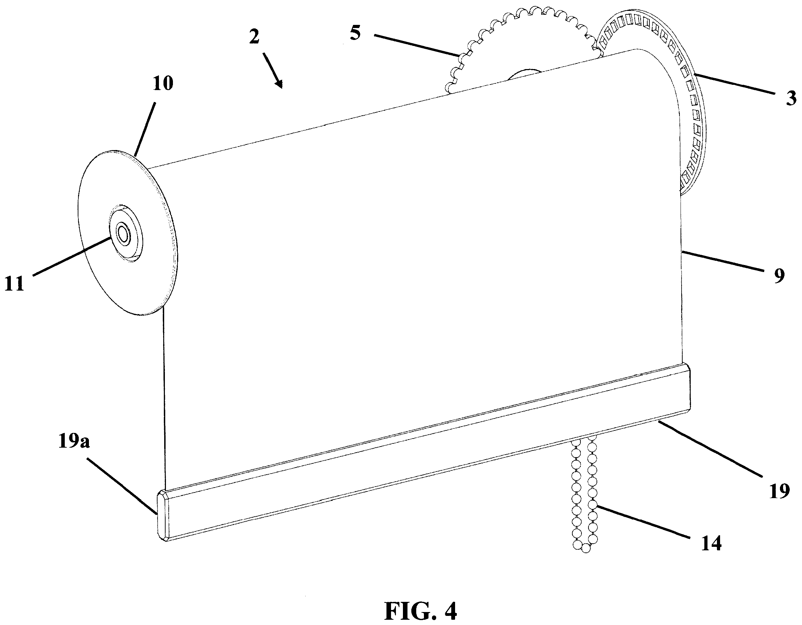

As shown in Figures 1 and 4, a first gear 3 is attached coaxially to one end of the roller 2. The first gear 3 is formed integrally with the collar 10, so as to minimize the space required between the end of the roller 2 and the adjacent end cap 6. Preferably, the first gear 3 is a disc-shaped gear with a plurality of slots adjacent its perimeter for receiving and engaging with the teeth of another gear, such as a spur gear. Alternatively, the first gear 3 may be another type of gear, such as a disc-shaped spur gear. Optionally, the end plug 11 on which the first gear 3 is attached, or formed, may include a clutch 11a that permits limited relative motion between the first gear 3 and the roller 2, so as to prevent damage to the components of the roller shade assembly, such as the drive assembly 4, if it is operated roughly or improperly.

As shown in Figures 1 and 4, one end of the roller 2 is rotatably mounted to the frame 1 so as to freely rotate relative to the frame 1, while the other end of the roller 2 is rotatably mounted to the frame 1 and is engaged with a drive assembly 4 via the first gear 3 to selectively drive rotation of the roller 2. The drive assembly 4 is attached to the frame 1 between the opposing ends of the frame 1. Preferably, the drive assembly 4 is a chain drive assembly 4 attached to a flange 6a that extends inwardly from one of the end caps 6 at the front of the roller shade assembly, to permit easy access to the chain when the fabric 9 is covering the window opening. Alternatively, the chain drive assembly 4 may be attached to the frame 1 anywhere where it may be operatively engaged with the first gear 3 and where it will not occupy any space between the end of the roller 2 and the end cap 6.

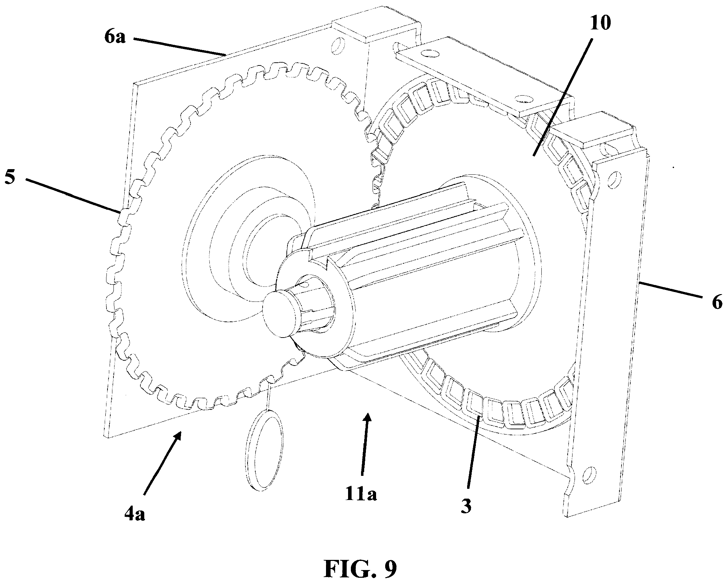

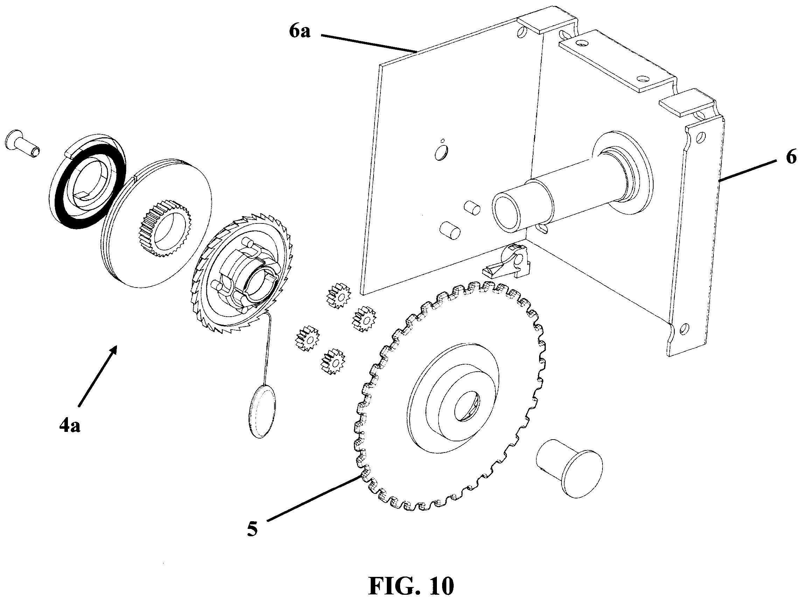

The chain drive assembly 4 has a chain 14 and a second gear 5 that rotates in response to the movement of the chain 14. The chain 14 is an endless chain that is looped through the chain drive assembly 4 and is operatively engaged with the second gear 5, for example by way of a sprocket adjacent to and rotationally fixed to the second gear 5. Guide rollers 16 may be positioned within the chain drive assembly 4 to facilitate a smooth pulling motion of the chain 14. Alternatively, as shown in Figures 9 and 10, the chain drive assembly 4 may be replaced with a ratchet-style retractable cord drive assembly 4a or a motorized drive assembly.

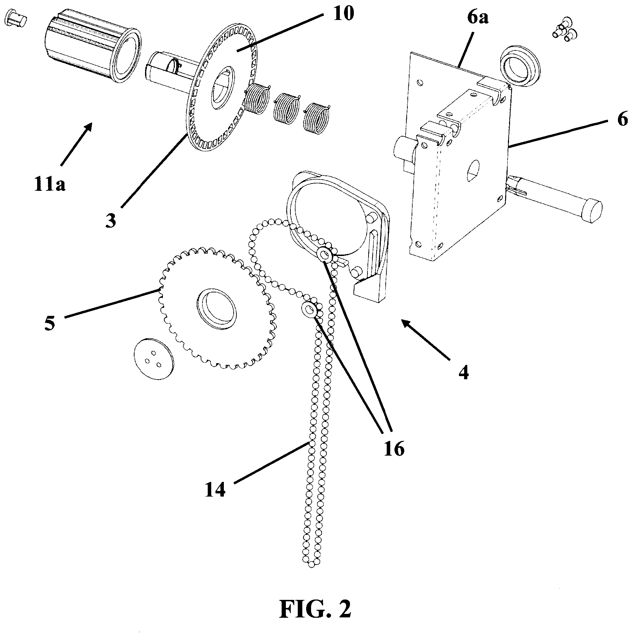

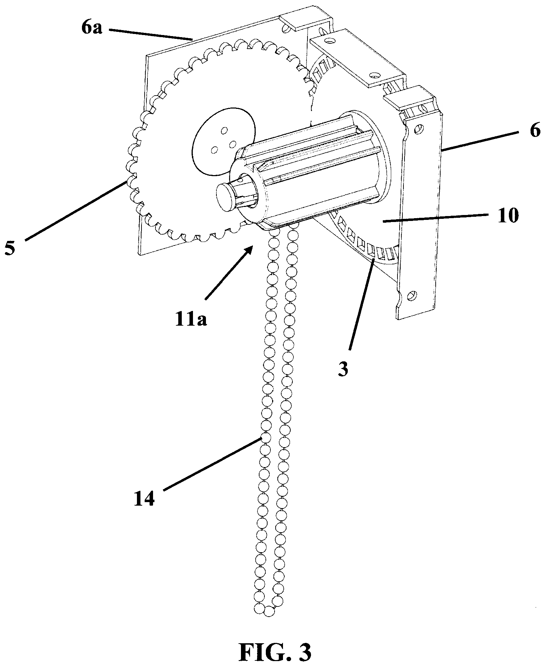

The second gear 5 is operatively engaged with the first gear 3 to transmit motion from the movement of the chain 14 into rotation of the roller 2. Preferably, the second gear 5 is a radial spur gear mounted on the frame 1 substantially at a 90° angle to the first gear 3 with the teeth of the first and second gears 3 and 5 engaged so as to rotationally couple the gears. Alternatively, the first and second gears 3 and 5 may be another type of angled or non-coaxial gear pairing. For example, the first and second gears 3 and 5 may be beveled gears, a crown gear, helical gears, a worm gear and spur gear, or a combination of gear types. Additionally, the first and second gears 3 and 5 are positioned at a 90° angle to one another, as shown in Figures 2-4. In embodiments not according to the invention, the first and second gears 3 and 5 are positioned with their axis of rotation parallel, but non-coaxial, or offset from one another, such that the second gear 5 is not positioned between the roller 2 and the end cap 6.

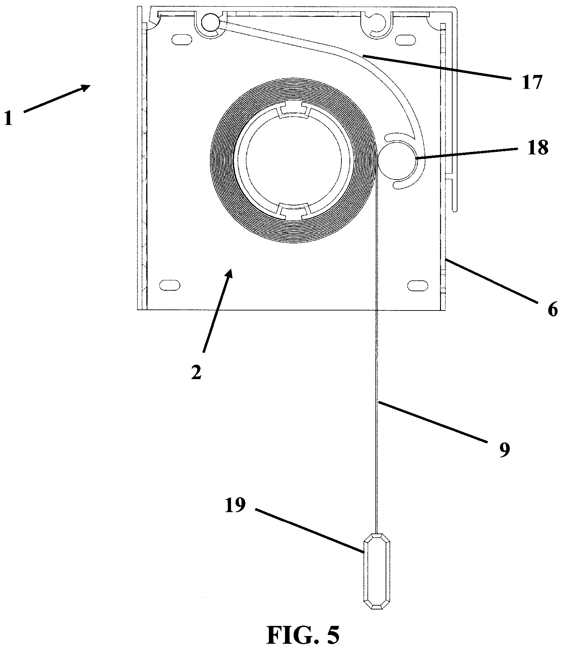

As shown in Figure 5, a fabric retaining assembly **17** may be mounted to the frame **1** above the roller **2,** so as to rest on the fabric **9** of the roller **2.** The fabric retaining assembly **17** may have a press bar **18** attached thereto, which makes contact with the surface of the fabric **9** on the roller **2.** The press bar **18** is sized to extend substantially the entire length of the roller tube **8,** but not to contact or interfere with the collars **10.** As the fabric **9** is unwound and re-wound on the roller **2,** the press bar **18** applies a force to the surface of the fabric **9** on the roller tube **8** to minimize or prevent any improper winding of the fabric **9,** which can cause telescoping. Optionally, the press bar **18** may be rotatably mounted to the fabric retaining assembly **17,** so as to act as a wheel and roll along the surface of the fabric **9.** Preferably, the fabric retaining assembly **17** is pivotally attached to the cover **7** on the underside of the top of the cover **7** and hangs freely, or is spring-loaded, so as to rest on the fabric **9.** Alternatively, the fabric retaining assembly **17** may be rigidly mounted to the cover **7,** or formed integrally therewith, and be configured to engage the fabric **9** and bend slightly out of position, so as to apply a force to the surface of the fabric **9.**

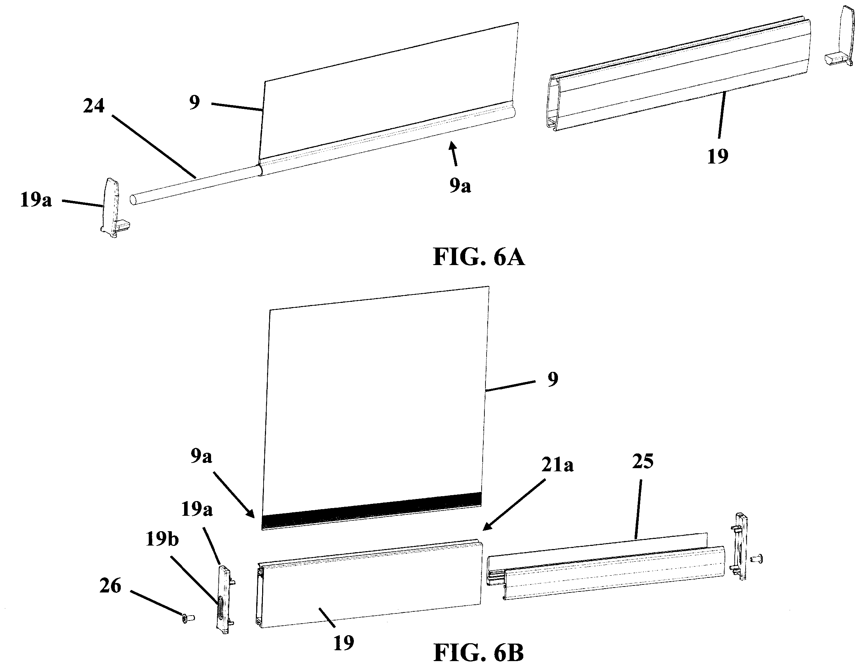

As shown in Figures 6A-8, the roller shade assembly may also include a self-adjusting bottom bar **19,** to minimize or eliminate any gaps at the bottom of the window opening, in addition to reducing the gaps along the sides of the window opening. A weight **20** is attached to the lower end, or free end **9a,** of the fabric **9** and is loosely retained within a generally U-shaped channel **21** extending the length of the bottom bar **19.** The upper end **21a** of the channel **21** is tapered inwardly and is sufficiently narrow to retain the weight **20** within the channel **21.** The weight **20** is thereby permitted to move freely within the channel **21,** but not to exit the channel **21.** As a result, the bottom bar **19** is permitted to self-adjust when it contacts the bottom of the window opening, for example, to accommodate a slightly angled window sill.

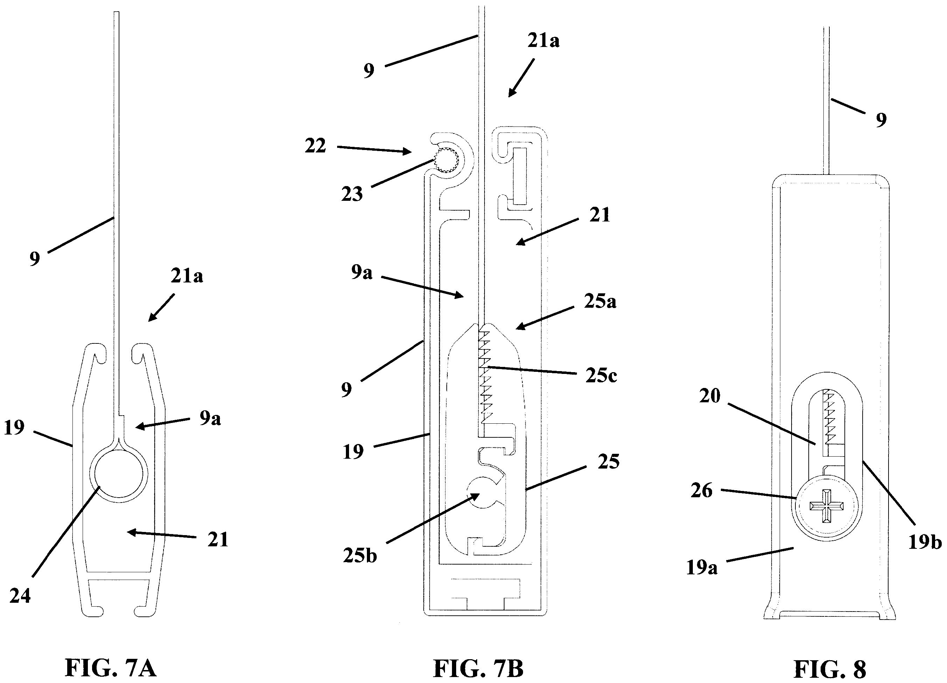

Optionally, the bottom bar **19** may configured to be wrapped in the same fabric **9** as is provided on the roller **2.** As shown in Figure 7B, the bottom bar **19** has one or more grooves **22** in which a length of fabric **9** is retained by way of one or more rods **23.** Preferably, the fabric **9** is placed into one of the grooves **22** and a rod **23** is snap-fitted or otherwise secured therein to frictionally retain the fabric **9** in place in the groove **22.** The fabric **9** is then wrapped around the bottom bar **19** and the opposing end of the length of fabric **9** is placed into the other groove **22** and similarly retained therein by way of another rod **23.** The fabric **9** may be wrapped around the substantially entire bottom bar **19,** or only a portion thereof. The rod **23** may be any desired shape or material, so as to fit securely within the corresponding groove **22.** The rod **23** may also be hollow, so as to more easily deform to facilitate snap-fitting into the groove **22.**

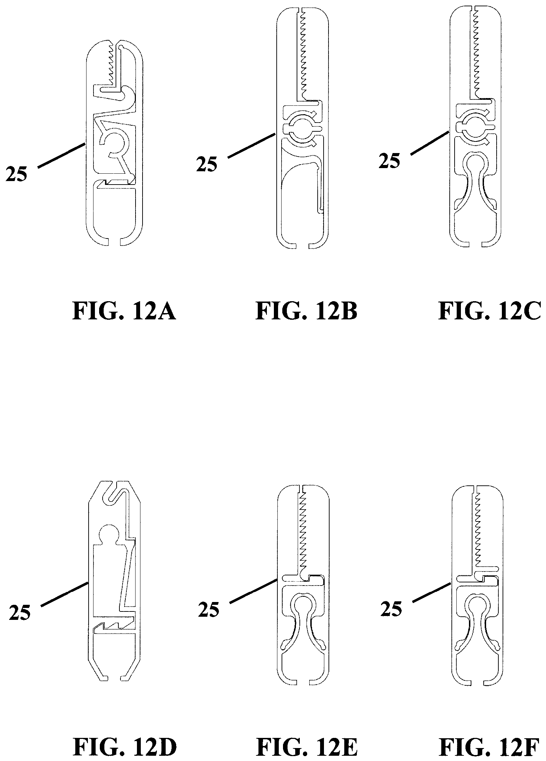

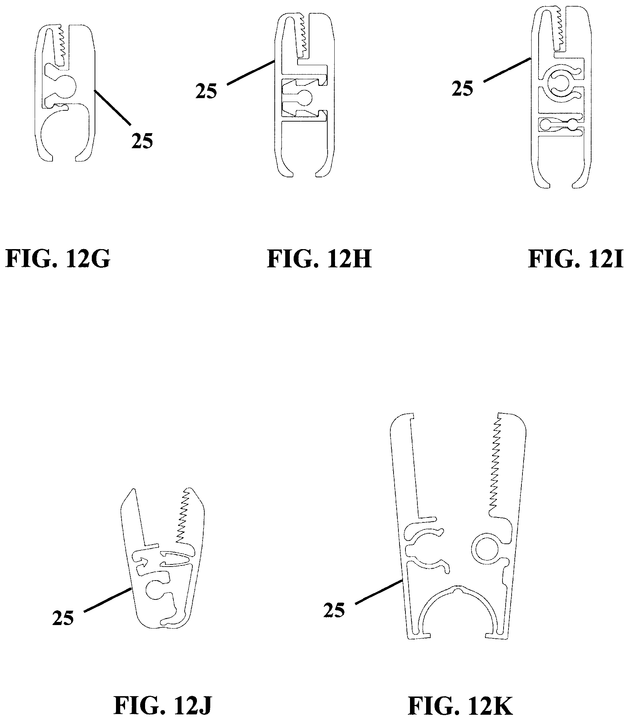

As shown in Figure 6A and 7A, the weight **20** may be a rod **24** to which the fabric **9** is attached and then rolled thereabout, so as to cover the weight **20** with the fabric **9.** Preferably, as shown in Figures 6B and 7B, the weight **20** is a clip **25** having a grip portion **25a** that attaches to and retains the free end **9a** of the fabric **9** therein. The clip **25** has two opposing sections that lock together to clamp or grip the free end **9a** of the fabric **9** and retain it in the grip portion **25a.** The opposing sections of the clip **25** may lock together by way of a snap-fit, as shown for example in Figures 12A-K. Alternatively, the opposing sections of the clip may lock together by way of a cam-lock, wedge-lock, or other suitable locking mechanism.

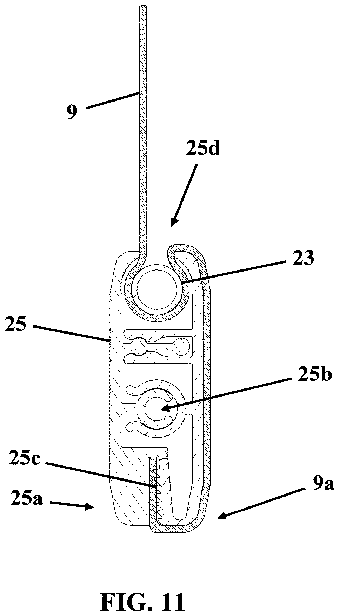

Preferably, the grip portion **25a** has teeth **25c** or other gripping elements, such as ridges or treads to facilitate gripping the free end **9a** of the fabric **9.** Optionally, one or both opposing sections of the clip **25** may have an adhesive, such as two-way tape, applied to the grip portion **25a** thereof to assist in gripping the fabric **9.** As shown in Figure 11, the clip **25** may be wrapped in the fabric **9,** similarly to the way the bottom bar **19** is wrapped. The clip **25** may have a groove **25d** formed along the length of one, or both, opposing sections of the clip **25** in which a loop of the fabric **9** is retained by a rod **23.** The fabric **9** passes from the grip portion **25a** around the clip **25** and a loop of the fabric **9** is retained in the groove **25d** by a rod **23** that may be snap-fitted into the groove **25d.**

As shown in Figure 6A and 6B, the bottom bar **19** may have caps **19a** at either end. Preferably, both caps **19a** have a slot-shaped aperture **19b** therethrough. The clip **25** may have a recess **25b** that is configured to receive a set screw **26** therein. The set screw **26** passes through the aperture **19b** in the cap **19a** and is inserted into the recess **25b** in the clip **25.** This permits the set screw **26** to be tightened at a desired position within the aperture **19b** to selectively position the ends of the weight **20** within the channel **21.** The angle of the bottom bar **19,** relative to the free end **9a** of the fabric **9** may thereby be selectively adjusted.

For example, during installation of the roller shade assembly, the set screws **26** on either end of the bottom bar **19** may be loose, so as to permit the weight **20** to move freely within the channel **21.** The chain drive assembly **4** may be operated so as to lower the fabric **9** until the bottom bar contacts a window sill at the bottom of the window opening. If the window sill is not perfectly level, one end of the bottom bar **19** will make contact with the window sill before the other. If the fabric **9** is lowered further, the free end **9a** of the fabric **9** and the weight **20** will continue to move downward, within the channel **21** until the other end of the bottom bar **19** contacts the window sill. The roller shade assembly could be operated in this way each time, so as to reduce or eliminate a gap at the bottom of the window opening, due to an angled window sill. Alternatively, when both ends of the bottom bar **19** contact the window sill, the set screws **26** on either end of the bottom bar **19** may be tightened to lock the weight **20** in position within the channel **21.** The bottom bar **19** will then remain at the same angle, relative to the weight **20** when it is raised and again lowered, so as to make even contact with the angled window sill.

The present invention has been described with reference to exemplary embodiments, however, it will be understood by those skilled in the art that various changed may be made and equivalents may be substituted for elements thereof without departing from the scope of the invention as set out in the following claims. Therefore, it is intended that the invention not be limited to the particular embodiments disclosed herein.

## Claims

1. A roller shade assembly, for installation in a window opening, comprising:
a frame (1) having opposing first and second ends attachable within the window opening;
a roller (2) rotatably mounted to the frame having opposing ends, a rotational axis, and a first gear (3) coaxially attached to one end of the roller (2);
wherein the roller (2) has a sheet material rolled thereon with a fixed end attached to the roller and a free end (9a) having a weight (20) attached thereto;
a drive assembly (4) attached to the frame between the first and second ends, having a second gear (5) that is selectively rotatable and is operatively engaged with the first gear (3) for imparting rotational motion from the drive assembly (4) to the roller (2);
wherein the first gear (3) is substantially perpendicular to the second gear (5);
**characterized in that** the roller shade assembly further comprises
a fabric retaining flange (10) extending radially outwardly from the roller (2) at each end of the roller (2);
wherein the first gear (3) is formed integrally with the fabric retaining flange (10) which is proximate to the drive assembly (4).

2. The roller shade assembly of claim 1, wherein the frame comprises a first end cap at the first end and a second end cap at the second end and a cover (7) extending between the first and second end caps (6).

3. The roller shade assembly of claim 2, wherein the cover (7) comprises a top and at least one side extending between the first and second end caps (6), and wherein the drive assembly (4) is attached to one side of the cover.

4. The roller shade assembly of claim 2, wherein the first end cap has a flange (6a) extending inwardly therefrom toward the second end cap, and wherein the drive assembly (4) is attached to the flange (6a).

5. The roller shade assembly of claim 1, wherein the first gear (3) is a disc-shaped gear with a plurality of slots adjacent its perimeter and the second gear (5) is a spur gear.

6. The roller shade assembly of claim 1, wherein a fabric retaining assembly (17) is mounted to the frame between the first and second ends so as to rest on the roller.

7. The roller shade assembly of claim 6, wherein the fabric retaining assembly (17) has a press bar (18) attached thereto extending parallel to the roller along substantially the entire length of the roller.

8. The roller shade assembly of claim 1, comprising a bottom bar (19) extending along the free end of the sheet material and having a channel (21) extending the length of the bottom bar (19) with an upper end (21a), wherein the weight (20) is loosely retained within the channel, and wherein the channel (21) is sized to permit the weight to move within the channel, and wherein the upper end (21a) of the channel is sized to prevent the weight (20) from exiting the channel.

9. The roller shade assembly of claim 8, wherein the weight (20) is a clip (25) having a grip portion (25a) and two opposing sections that are shaped complementary to one another so as to lock together to grip the free end of the sheet material and retain it in the grip portion (25a) of the clip.

## Patentansprüche

1. Rollenblendenvorrichtung zum Einbau in eine Fensteröffnung, umfassend:
Einen Rahmen (1) mit entgegengesetzten ersten und zweiten Enden, der sich innerhalb der Fensteröffnung anbringen lässt;
eine Rolle (2), die drehbar an den Rahmen mit entgegengesetzten montiert ist, eine Rotationsachse und ein erstes Zahnrad (3), das koaxial an ein Ende der Rolle (2) angebracht ist;
wobei die Rolle (2) ein darauf aufgerolltes Tuchmaterial aufweist, dessen fixiertes Ende an die Rolle angebracht ist und ein freies Ende (9a) ein daran angebrachtes Gewicht (20) aufweist;
eine an den Rahmen zwischen den ersten und zweiten Enden angebrachte Antriebsanordnung (4), die ein zweites Zahnrad (5) aufweist, das sich selektiv drehen lässt und betriebsfähig mit dem ersten Zahnrad (3) in Eingriff ist, um Drehbewegung von der Antriebsanordnung (4) auf die Rolle (2) zu übertragen;
wobei das erste Zahnrad (3) wesentlich senkrecht zum zweiten Zahnrad (5) ist;
**dadurch gekennzeichnet, dass** die Anordnung der Rollenblende weiter umfasst:
Einen Gewebehalteflansch (10), der sich von der Rolle (2) an jedem Ende der Rolle (2) nach außen erstreckt;
wobei das erste Zahnrad (3) integral mit dem Gewebehalteflansch (10) geformt ist, der sich in der Nähe der Antriebsanordnung (4) befindet.

2. Rollenblendenvorrichtung nach Anspruch 1, wobei der Rahmen eine erste Endkappe am ersten Ende und eine zweite Endkappe am zweiten Ende und eine Abdeckung (7) umfasst, die sich zwischen den ersten und zweiten Endkappen (6) erstreckt.

3. Rollenblendenvorrichtung nach Anspruch 2, wobei die Abdeckung (7) eine Oberseite und mindestens eine Seite umfasst, die sich zwischen den ersten und zweiten Endkappen (6) erstreckt, und wobei die Antriebsanordnung (4) an einer Seite der Abdeckung angebracht ist.

4. Rollenblendenvorrichtung nach Anspruch 2, wobei die erste Endkappe einen Flansch (6a) aufweist, der sich daraus nach innen in Richtung der zweiten Endkappe erstreckt, und wobei die Antriebsanordnung (4) am Flansch (6a) angebracht ist.

5. Rollenblendenvorrichtung nach Anspruch 1, wobei das erste Zahnrad (3) ein scheibenförmiges Zahnrad mit einer Vielzahl von Schlitzen angrenzend an seinen Umfang ist und das zweite Zahnrad (5) ein Stirnrad ist.

6. Rollenblendenvorrichtung nach Anspruch 1, wobei eine Gewebehalteanordnung (17) an den Rahmen zwischen den ersten und zweiten Enden so montiert ist, dass sie auf der Rolle ruht.

7. Rollenblendenvorrichtung nach Anspruch 6, wobei die Gewebehalteanordnung (17) eine daran angebrachte Druckstange (18) aufweist, die sich parallel zur Rolle im Wesentlichen entlang der ganzen Länge der Rolle erstreckt.

8. Rollenblendenvorrichtung nach Anspruch 1, die eine untere Stange (19) umfasst, die sich entlang des freien Endes des Tuchmaterials erstreckt und einen Kanal (21) aufweist, der sich über die Länge der unteren Stange (19) erstreckt und ein oberes Ende (21a) aufweist, wobei das Gewicht (20) lose innerhalb des Kanals gehalten wird, und wobei der Kanal (21) so bemessen ist, dass sich das Gewicht innerhalb des Kanals bewegen kann, und wobei das obere Ende (21a) des Kanals so bemessen ist, dass das Gewicht (20) daran gehindert wird den Kanal zu verlassen.

9. Rollenblendenvorrichtung nach Anspruch 8, wobei das Gewicht (20) ein Clip (25) ist, der ein Griffteil (25a) und zwei gegenüberliegende Teile aufweist, die komplementär zueinander geformt sind, sodass sie sich miteinander verriegeln, um das freie Ende des Tuchmaterials zu ergreifen, und im Griffteil (25a) des Clips festzuhalten.

## Revendications

1. Un ensemble store à rouleau, pour installation dans une ouverture de fenêtre, comprenant :
un cadre (1) ayant des première et deuxième extrémités opposées, pouvant être attachées à l'intérieur de l'ouverture de fenêtre ;
un rouleau (2) monté rotatif sur le cadre, ayant des extrémités opposées, un axe de rotation et un premier engrenage (3) attaché coaxialement à une extrémité du rouleau (2) ;
le rouleau (2) ayant un matériau en feuille enroulé sur celui-ci avec une extrémité fixe attachée au rouleau et une extrémité libre (9a) ayant un poids (20) attaché à celle-ci ;
un ensemble d'entraînement (4) attaché au cadre entre les première et deuxième extrémités, ayant un deuxième engrenage (5) sélectivement rotatif et en prise fonctionnelle avec le premier engrenage (3) pour transmettre un mouvement de rotation de l'ensemble d'entraînement (4) au rouleau (2) ;
le premier engrenage (3) étant sensiblement perpendiculaire au deuxième engrenage (5) ;
**caractérisé en ce que** l'ensemble store à rouleau comprend en sus
une bride de retenue de tissu (10) s'étendant radialement vers l'extérieur depuis le rouleau (2) à chaque extrémité du rouleau (2) ;
le premier engrenage (3) étant formé d'une seule pièce avec la bride de retenue de tissu (10) qui est proche de l'ensemble d'entraînement (4).

2. L'ensemble store à rouleau de la revendication 1, dans lequel le cadre comprend un premier bouchon d'extrémité à la première extrémité et un deuxième bouchon d'extrémité à la deuxième extrémité et un boîtier (7) s'étendant entre les premier et deuxième bouchons d'extrémité (6).

3. L'ensemble store à rouleau de la revendication 2, dans lequel le boîtier (7) comprend un dessus et au moins un côté s'étendant entre les premier et deuxième bouchons d'extrémité (6), et dans lequel l'ensemble d'entraînement (4) est attaché à un côté du boîtier.

4. L'ensemble store à rouleau de la revendication 2, dans lequel le premier bouchon d'extrémité a une bride (6a) s'étendant vers l'intérieur à partir de celle-ci vers le deuxième bouchon d'extrémité, et dans lequel l'ensemble d'entraînement (4) est attaché à la bride (6a).

5. L'ensemble store à rouleau de la revendication 1, dans lequel le premier engrenage (3) est un engrenage en forme de disque avec une pluralité de fentes adjacentes à son périmètre et le deuxième engrenage (5) est un engrenage droit.

6. L'ensemble store à rouleau de la revendication 1, dans lequel un ensemble de retenue du tissu (17) est monté sur le cadre entre les première et deuxième extrémités de manière à reposer sur le rouleau.

7. L'ensemble store à rouleau de la revendication 6, dans lequel l'ensemble de retenue du tissu (17) a une barre de pression (18) attachée sur celui-ci s'étendant parallèlement au rouleau le long de sensiblement toute la longueur du rouleau.

8. L'ensemble store à rouleau de la revendication 1, comprenant une barre inférieure (19) s'étendant le long de l'extrémité libre du matériau en feuille et ayant une goulotte (21) s'étendant sur la longueur de la barre inférieure (19) avec une extrémité supérieure (21a), dans lequel le poids (20) est retenu de manière lâche à l'intérieur de la goulotte, la goulotte (21) étant dimensionnée pour permettre au poids de bouger à l'intérieur de la goulotte, et l'extrémité supérieure (21a) de la goulotte étant dimensionnée pour empêcher le poids (20) de sortir de la goulotte.

9. L'ensemble store à rouleau de la revendication 8, dans lequel le poids (20) est une pince (25) ayant une partie de serrage (25a) et deux sections opposées de forme complémentaire l'une par rapport à l'autre de manière à se verrouiller pour accrocher l'extrémité libre du matériau en feuille et la retenir dans la partie de serrage (25a) de la pince.
